# EUROPÄISCHE PATENTANMELDUNG

(11) **EP 4 733 014 A1**
(43) Veröffentlichungstag der Anmeldung: **29.04.2026**
(21) Anmeldenummer: 24208667.6
(22) Anmeldetag: 24.10.2024
(51) Int. Cl.: B25J 15/00, B25J 15/06, B25J 15/08, B65H 3/00, B65H 7/06

(54) **VORRICHTUNG UND VERFAHREN ZUM AUTOMATISCHEN HANDHABEN HOHLER ZYLINDRISCHER WERKZEUGE**

(71) Anmelder: Heinrich Georg GmbH Maschinenfabrik, 57223 Kreuztal (DE)
(72) Erfinder: Bäumener, Tillmann, 57223 Kreuztal (DE)
(74) Vertreter: Moser Götze & Partner Patentanwälte mbB

(57) **Zusammenfassung**

Vorrichtung und Verfahren zum automatischen Handhaben hohler zylindrischer Werkzeuge, insbesondere von Werkzeugen ohne Verringerung der Wandstärke am Innenrand von Längsteilanlagen, welche einen Greifkopf umfasst, der mindestens zwei, vorzugsweise drei, radial ausfahrbare Greiffinger aufweist, die jeweils einen Winkel größer 90 Grad zwischen sich ausbilden und zwischen einer Ruhestellung und einer Greifstellung radial verfahrbar ausgestaltet sind, um in die Werkzeuge in der Ruhestellung einzugreifen und in der Greifstellung spreizend zu klemmen, wobei die Greiffinger jeweils über eine Einrichtung zur Erzeugung einer gerichteten Abstoßungskraft im Endbereich verfügen.

## Beschreibung

Die Erfindung betrifft eine Vorrichtung zum automatischen Handhaben hohler zylindrischer Werkzeuge nach Anspruch 1 und ein entsprechendes Verfahren nach Anspruch 11.

In sogenannten Längsteilanlagen werden Metallbänder in Längsrichtung in schmalere Streifen aufgetrennt. Dazu weisen diese üblicherweise Längsteilscheren auf, die als zylindrische Messerbalken bzw. Messerwellen ausgestaltet sind, auf denen hohle zylindrische Werkzeuge, wie Rollenscherenmesser, Distanzringe und Auswerferringe sowie ein Endanlagering aufgeschoben sind.

Dabei schneiden die Rollenschermesser das Material, die Auswerferringe führen das Material und die Distanzringe stellen die gewünschten Schnittbreiten und Schnittspalte ein. Die Endanlageringe bilden das Ende eines Werkzeugaufbaus und verhindern ein seitliches Verrutschen der Werkzeuge. Die Endanlageringe dienen als Druckringe und übertragen eine Spannkraft, welche mittels Hydraulikmutter aufgebracht wird und das gesamte Werkzeugpaket auf der Messerwelle festspannt. Durch die entsprechende Anordnung der Werkzeuge auf der Messerwelle ist eine Konfektion der Längsteilscheren möglich.

Die Längsteilscheren bzw. deren Werkzeuge werden oft auf Armen von Vorbaugerüsten vorkonfektioniert.

In diesem Zusammenhang ist es bekannt, die hohlen zylindrischen Werkzeuge auf Lagerarmen aufgeschoben vorzuhalten. Diese werden dann wunschgemäß entnommen und auf die Arme des Messervorbaugerüsts oder auf die zylindrischen Messerwellen aufgeschoben. Dies kann manuell oder auch robotergestützt erfolgen.

Dabei ist es bekannt, Vorrichtungen zum automatischen Lagern (Vorhalten) der hohlen zylindrischen Werkzeuge zu verwenden, welche mindestens einen drehbaren Karussellturm mit mehreren radialen Armen in übereinander angeordneten Ebenen aufweisen. Ein verfahrbarer Greifer handhabt die Werkzeuge zur Ablage bzw. Abnahme von den radialen Armen.

So ist von der Firma Make SRL (https://www.makeitaly.com ) ein sogenannter STAHL-2 Messerbauroboter mit Lager bekannt, in dem die Werkzeuge in einem Karusselturm auf radialen Armen gelagert werden, die in übereinander angeordneten Ebenen abwechselnd angeordnet sind, so dass die Arme in jeder zweiten Ebene vertikal fluchten. Die Lagerung erfolgt mit großem Abstand der Arme (vgl. https://www.youtube.com/watch?v=5e0BRORZaik bei 1:18 Minuten) Auch die Firma Scandanavian Robotics AB (https://www.scanrobotics.se/en/2018/12/14/new-developed-robot-system/) bietet ähnliche Systeme an.

Aus der DE 10 2014 014918 , EP 2 193 890 A1 und EP 1 142 662A1 A1 sind z. B. Greifer bekannt, die dazu verwendet werden, um die entsprechenden Werkzeuge handzuhaben. Die EP 1 142 662 A1 z. B. beschreibt einen Greifer, der mit einem ausfahrbaren Innengreifer auf die ringförmigen Werkzeuge zugreift. Der Innengreifer weist drei spreizbare Finger auf, die gleichmäßig verteilt zueinander angeordnet sind.

Ein generelles Problem bei der Lagerung und der Handhabung der Werkzeuge ist, dass die Werkzeuge zur Platzersparnis auf den Armen mehrfach nebeneinander und aneinander liegend gelagert werden. Dabei neigen die Werkzeuge zum Aneinanderhaften und müssen zur einzelnen Entnahme bzw. Handhabung voneinander gelöst werden.

Dazu ist es bei den Werkzeugen mit größeren Wandstärken bekannt, mittels keilartiger Greiffinger in die dort vorhandenen Schmutzrillen zum Trennen der Werkzeuge einzugreifen. Denn die dort gegenüberliegenden Schmutzrillen bilden gemeinsam eine Art Tasche aus, die durch die dort vorliegende Verringerung der Wandstärke der einander gegenüberliegenden Flächen der Werkzeuge entsteht. Diese Tasche erlaubt eine einfache Eingriffsmöglichkeit.

Allerdings ist das einzelne Handhaben von Werkzeugen, insbesondere sehr dünner Werkzeuge mit Materialstärken kleiner gleich 3 mm ohne diese Schmutzrillen oder sonstigen Verringerungen der Wandstärken schwierig, da dort die Werkzeugplanflächen aneinander liegen.

So offenbart die DE 10 2014 014918 A1 die Verwendung eines gesonderten

Trenngreifers, um das zweite Werkzeug zurückzuhalten.

Die WO 2004/098839 A1 offenbart die Verwendung von abstoßenden Magnetfeldern in den zu trennenden Werkzeugen beim Greifen. EP 2 193 890 A1 beschreibt ein dazu passendes Entmagnetisierungsverfahren.

Demgegenüber besteht die Aufgabe der vorliegenden Erfindung darin, eine verbesserte Möglichkeit zu schaffen, mit der hohle zylindrische Werkzeuge, insbesondere Werkzeuge ohne Verringerung der Materialstärke am Rand, einzeln gehandhabt werden können. Insbesondere sollen so auch Werkzeuge mit dünnen Materialstärken gut greifbar sein.

Diese Aufgabe wird durch der in Anspruch 1 wiedergegebenen Vorrichtung und dem Verfahren nach Anspruch 11 gelöst. Vorteilhafte Ausgestaltungen ergeben sich aus den Unteransprüchen und der Beschreibung.

Erfindungsgemäß ist erkannt worden, dass wenn die Greiffinger jeweils über eine Einrichtung zur Erzeugung einer gerichteten Abstoßungskraft im Endbereich verfügen, eine zielgerichtete Trennung des zu ergreifenden Werkzeugs von dem anliegenden Werkzeug möglich wird.

Mit anderen Worten, es wird in den Greiffingern selber eine Kraft gezielt erzeugt, um das ungewünschte anhaftende Werkzeug abzustoßen, so dass nur das geklemmte Werkzeug beim Handhaben tatsächlich bewegt wird.

Unter gezielt ist vorliegend zu verstehen, dass die Kraft von dem geklemmten Zielwerkzeug weg in Richtung des unerwünschten Nachbarwerkzeugs gerichtet ist, um dieses möglichst effizient vom dem gewünschten Zielwerkzeug zu lösen.

In einer Ausführungsform ist die Einrichtung zur Erzeugung einer gezielten Abstoßungskraft eine Druckluftdüse. Diese kann gesteuert mit Druckluft beaufschlagt werden, um das ungewollte Werkzeug abzublasen. Die Druckluftdüse kann dabei in axialer-radialer Richtung schräg von Innen nach Außen in Zugriffsrichtung verlaufen, um das Ablasen zu verbessern.

Auch können mehrere Druckluftdüsen vorgesehen sein. Dann ist es bevorzugt, wenn je eine Druckluftdüse dabei in axialer-radialer Richtung schräg von Innen nach Außen in Zugriffsrichtung bzw. entgegengesetzt ausrichtet ist.

Die Druckluftzufuhr kann gesteuert kontinuierlich und/oder pulsierend oder stoßweise erfolgen.

Zur Unterstützung der einzelnen Handhabung und Trennung der Werkzeuge voneinander kann der Greifkopf zusätzlich eine Vibrationseinrichtung aufweisen. Dann können die Werkzeuge durch das so entstehende Schütteln beim Greifen zusätzlich getrennt werden.

Die Vibrationseinrichtung kann einerseits den gesamten Greifkopf in Vibration und andererseits gezielt nur die Greiffinger in Vibration versetzen. Somit kann die Vibration kontrolliert auf die Werkzeuge übertragen werden.

Zum Ein- und Ausfahren der Greiffinger zwischen der Ruhestellung und der Greifstellung kann ein Linearantrieb vorgesehen sein. Bevorzugt ist eine Kniehebelmechanik. Denkbar sind aber auch Zahnstangen, elektrische Linearantriebe mit Spindelachsen und Kugelgewinde, Faltspindel, Kurvenscheiben, Zugmitteltriebe etc. Verwendbar sind auch Hydraulikzylinder und Pneumatikzylinder oder elektromechanische Linearantriebe, wie Linearmotor mit elektrodynamischem Wirkprinzip, Linearaktoren mit piezoelektrischem Wirkprinzip, mit elektrostatischem Wirkprinzip, mit elektromagnetischem Wirkprinzip, mit magnetostriktivem Wirkprinzip mit thermoelektrischem Wirkprinzip.

Um unterschiedlichen Innendurchmessern der Werkzeuge zu begegnen und verschiedene Klemmkräfte auszubilden, können die Greiffinger hinsichtlich des Ausmaßes der Ausfahrlänge gesteuert radial verfahrbar ausgestaltet sein. Dabei besteht die Möglichkeit, die Kraft separat und individuell über die Steuerung oder Software einzustellen und bei wiederkehrenden Werkzeugen eine gezielte Voreinstellung für die beste Klemmkraft zu erreichen.

In einer bevorzugten Ausführungsform ist der Linearantrieb eine Kniehebelmechanik und die Kniehebelmechanik wird über ein Kugelgewindeantrieb angetrieben. Durch den Kugelgewindetrieb kann die Kniehebelmechanik stufenlos und genau bewegt werden.

Die Greiffinger können zwischen sich jeweils einen 120 Grad Winkel ausbilden, insbesondere wenn drei Stück vorgesehen werden. Diese sind dann bevorzugt Y-förmig angeordnet. Die Greiffinger können identisch oder unterschiedlich ausgestaltet sein. So ist es möglich, die beiden oberen Greiffinger identisch und den unteren Greiffinger unterschiedlich auszugestalten. Die Greiffinger können auch am Greifkopf wechselbar ausgestaltet sein.

Zum keil-förmigen Trennen der Werkzeuge können die Greiffinger jeweils einen spitz-zulaufenden Endbereich (Abschiebekeil) aufweisen, so dass auch klassisch größere Werkzeuge getrennt und hintergriffen werden können.

Die Greiffinger können zum besseren spreizenden Klemmen am Übergang zum spitz-zulaufenden Endbereich einen äußeren und/oder inneren Klemmabsatz aufweisen. In diesem Bereich können auch die Druckluftdüse(n) ihren Ausgang haben bzw. angeordnet sein.

Insbesondere der untere Greiffinger kann abweichend ausgestaltet werden. Dazu kann dieser eine abweichende Erstreckung und neben dem Abschiebekeil und Klemmabsatz auch eine Abschiebenut aufweisen. Der Abschiebekeil fluchtet dann mit denjenigen der übrigen Greiffinger und der Klemmabsatz ist davon durch die Abschiebenut beabstandet, so dass der Klemmabsatz weiter in Greifrichtung vorsteht als die der übrigen Greiffinger. Somit wird es möglich, mit den übrigen (z. B. oberen) Greiffingern das gewünschte Werkzeug spreizend zu klemmen und somit zu greifen und gleichzeitig das ungewünschte hintere Werkzeug mit dem versetzten Klemmabsatz zurückzuhalten und das Greifen und Abziehen des gewünschten Werkzeugs durch die Abschiebenut zu unterstützen.

Beim Spreizen wird demnach das gewünschte Werkzeug durch den Klemmabsatz der oberen Greiffinger nach oben geschoben und entfernt sich somit von dem radialen Arm, auf dem es gelagert ist. Damit das hintere anhaftende Werkzeug nicht mit nach oben rutscht, wird dieses von dem unteren Greiffinger mit dessen versetztem Klemmabsatz unten gehalten.

Dadurch, dass das hintere anhaftende Werkzeug vor die Druckluftdüsen der oberen Greiffinger rutscht, steigt der Effekt mit der Druckluft, das dahinterliegende Werkzeug abzustoßen. In diesem Fall fahren alle drei Greiffinger gleichzeitig und gleichmäßig aus. Sind die Greiffinger vollständig ausgefahren, wird das ungewünschte Werkzeug durch den Klemmabsatz des unteren Greiffingers gehalten oder eingeklemmt und der Greifkopf kann sich mit dem das gewünschte Werkzeug wegbewegen.

Zusätzlich können die Druckluftdüsen am Klemmabsatz des unteren Greiffingers abweichend ausgestaltet sein. Die Druckluftdüsen können umgekehrt als die übrigen in axialer-radialer Richtung schräg von Außen nach Innen in Zugriffsrichtung und entgegengesetzt verlaufend ausgerichtet sein, so dass die Druckluft zur keil-förmigen Spitze (Abschiebekeil) hin ausgestoßen wird und auf das gewünschte Werkzeug wirkt.

Die Erfindung betrifft auch ein Verfahren zum automatischen Handhaben eines einzelnen hohlen zylindrischen Werkzeugs aus einer Gruppe von aneinander liegenden Werkzeugen, insbesondere eines hohlen zylindrischen Werkzeugs ohne Verringerung der Wandstärke am Rand, gegebenenfalls unter Verwendung einer zuvor beschriebenen Vorrichtung, wobei das hohle zylindrische Werkzeug durch Einführen und Aufspreizen von Greiffingern eines Greifkopfes von innen klemmend gehalten wird, und anschließend die Greiffinger eine gerichtete abstoßende Kraft erzeugen und/oder vibrieren, um an dem Werkzeug haftende weitere Werkzeuge davon zu lösen.

Weitere Details der Erfindung ergeben sich aus der nachfolgenden Beschreibung von Ausführungsbeispielen anhand der Zeichnung, in der
- Fig. 1: eine schematische perspektivische Ansicht einer Vorrichtung zum automatischen Lagern von zylindrischen Werkzeugen von Seite des Handhabungssystems mit geöffneter Einhausung;

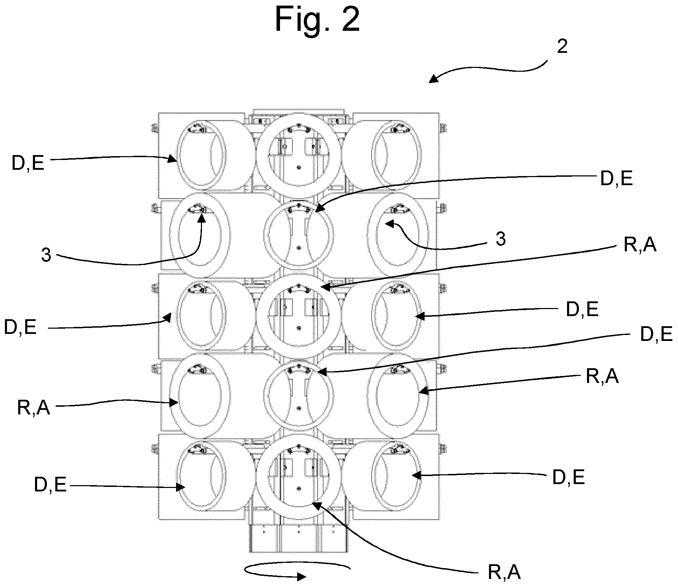

- Fig. 2: eine schematische Seitenansicht eines mit Werkzeugen belegten Turms aus Figur 1;
- Fig. 3: eine Draufsicht von oben auf den Turm aus Figur 2;

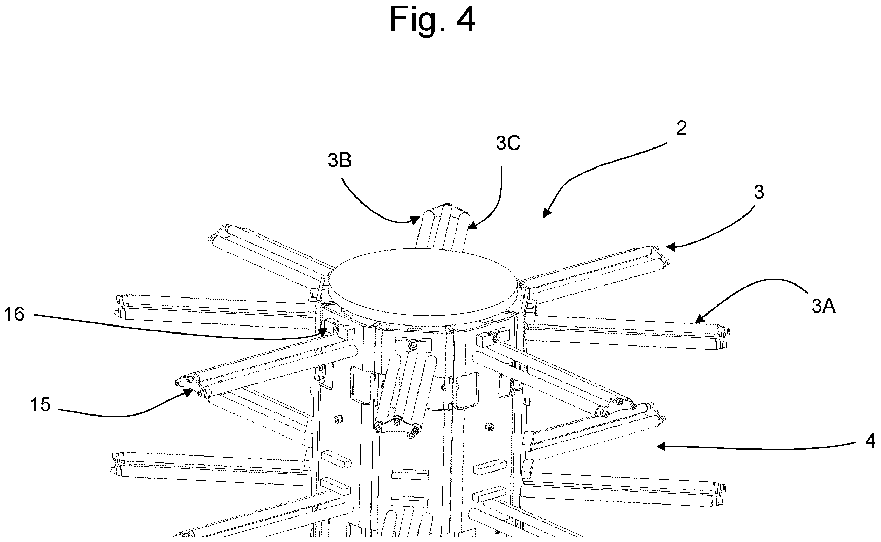

- Fig. 4: eine schematische perspektivische Ansicht auf den oberen Bereich eines unbelegten Turms aus Figur 1;
- Fig. 5: eine schematische perspektivische Ansicht auf das Handhabungssystem aus Figur 1;

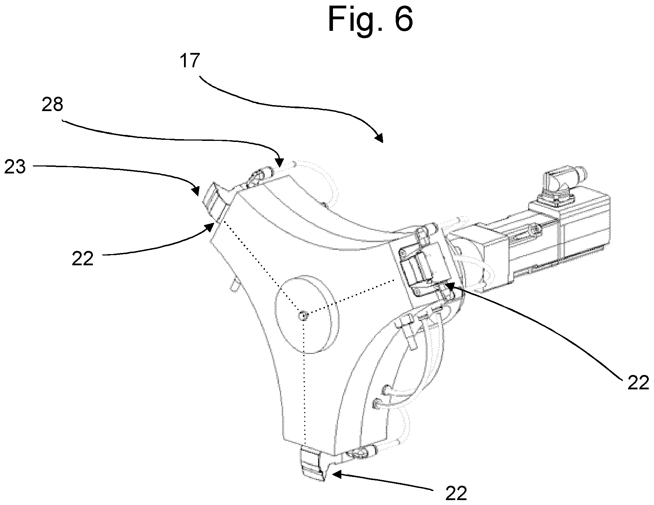

- Fig. 6: eine schematische perspektivische Ansicht auf den Greifkopf aus Figur 5;

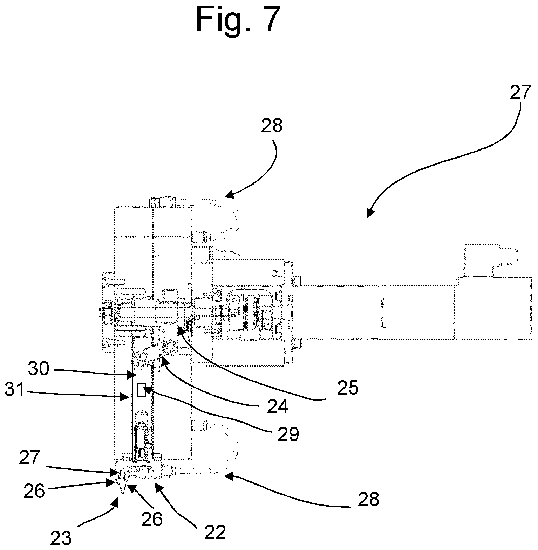

- Fig. 7: eine Schnittansicht auf den Greifkopf aus Figur 5; und
- Fig. 8 und 9: eine schematische Seitenansicht im Bereich der oberen Greiffinger beim Handhaben eines Distanzrings sowie
- Fig. 10: eine schematische Seitenansicht im Bereich eines abweichenden unteren Greiffingers zeigen.

In den Figuren ist eine als Ganzes mit 1 bezeichnete Vorrichtung zum automatischen Lagern von zylindrischen Werkzeugen dargestellt.

Die Vorrichtung 1 umfasst mehrere drehbare und entlang einer Geraden angeordnete Türme 2 mit mehreren radialen Armen 3 in übereinander angeordneten Ebenen 4 und einem entlang der Türme 2 vertikal verfahrbaren Handhabungssystem 5 für die Handhabung der Werkzeuge und eine Steuerung 1000 zur Steuerung der gesamten Vorrichtung.

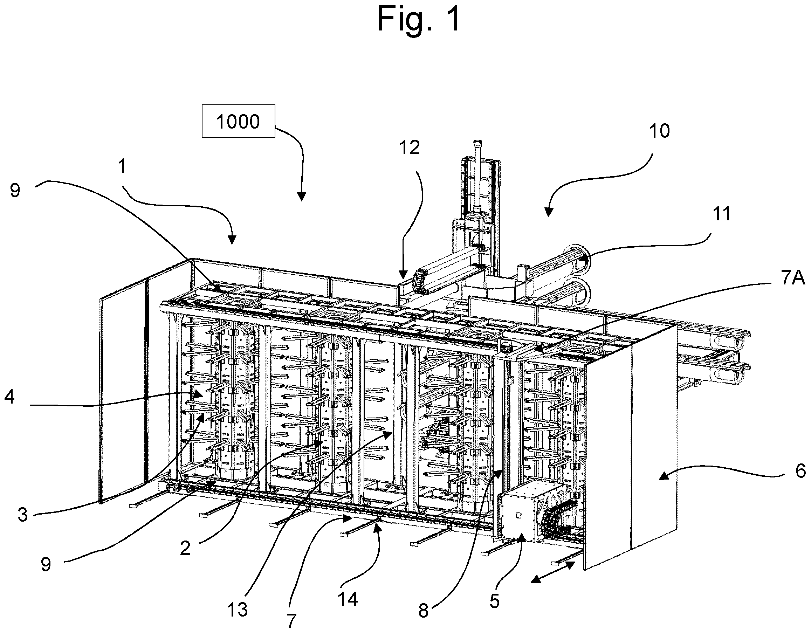

Die Türme 2 und auch das Handhabungssystem 5 befinden sich in einer, ggf. mobilen, Einhausung 6, um die Werkzeuge vor Umwelteinflüssen und Verschmutzung zu schützen. In Figur 1 ist zur besseren Übersicht eine Längsseite und die Oberseite der Einhausung 6 weggelassen.

Die Werkzeuge sind Rollenscherenmesser R, Distanzringe D und Auswerferringe A sowie Endanlageringe E, die in einer Längsteilanlage Verwendung finden.

Die Einhausung 6 weist auf einer Längsseite neben den Türmen 2 einen unteren Verfahrweg 7 für das Handhabungssystem 5 auf, so dass dieses innerhalb der Einhausung 6 an die Türme 2 herangefahren werden kann, um die Werkzeuge handzuhaben.

Das Handhabungssystem 5 kann neben der Längsfahrt auch in der Höhe an einem Mast 8 verfahren werden, um alle Ebenen der radialen Arme 3 zu erreichen.

Die Türme 2 sind auf einem innerhalb der Einhausung 6 angeordneten Traggerüst 9 montiert, wobei sie in dem Traggerüst beidseitig, also oben und unten gelagert und geführt sind. Der gesteuerte Antrieb zum Drehen der Türme 2 ist von oben vom Traggerüst 9 her angeflanscht.

Das Handhabungssystem 5 ist beim Verfahren am Traggerüst 9 unten am Verfahrweg 7 und oben an einer Führung 7A geführt und angetrieben. Dazu ist sowohl unten wie oben ein Zahnstangenantrieb implementiert und oben sowie unten eine Linearführung vorgesehen.

Das Handhabungssystem 5 ist zusätzlich neben der Horizontal- und Vertikalfahrt auch (weiter) ausfahrbar ausgestaltet, um die aufgenommenen Werkzeuge auf die Arme 11 eines Messervorbaugerüst 10 oder auf die Messerwelle aufzuschieben.

In der von dem Verfahrweg 7 abgewandten Seite der Einhausung 6 ist eine verschließbare Öffnung 12 vorgesehen, durch die das Handhabungssystem 5 bzw. dessen Greifkopf 17 das Messervorbaugerüst 10 erreichen kann, um darauf befindliche Arme 11 oder Messerwellen mit Werkzeugen zu ent- und versorgen. Korrespondierend zur Öffnung 12 ist zwischen den Türmen 2 eine Lücke 13 vorgesehen, so dass der Greifkopf 17 des Handhabungssystems 5 hindurchgeführt werden kann.

Dazu kann das Messervorbaugerüst 10 mit dem zu bestückenden Arm 11 bzw. Messerwelle in die Einhausung 6 eintauchend verfahren werden.

Alternativ ist es möglich, dass das Handhabungssystem 5 bzw. dessen Greifkopf 17 entsprechend weit ausgefahren werden kann, um den Arm 11 bzw. die Messerwelle ohne deren eintauchen zu erreichen.

Die gesamte Einhausung 6 inkl. aller Komponenten ist auf einem Verfahrrahmen 14 platziert, so dass die Einhausung 6 relativ zu dem Messervorbaugerüst 10 beweglich ist.

Jeder Turm 2 kann gesteuert über motorisch gesteuerte einstellbare Antriebe verdreht werden, um dem Handhabungssystem 5 die gewünschten radialen Arme 3 zur Lagerung oder Übernahme eines bestimmten Werkzeugs R, A, E, D zu präsentieren. Die radialen Arme 3 stehen von dem gesteuert drehbaren vertikalen Turm 2 radial nach außen vor, so dass sie von dem seitlich heranfahrbaren Handhabungssystem 5 bedient werden können, wenn der Turm 2 entsprechend verdreht wurde, um den entsprechenden radialen Arm 3 zu präsentieren, der das gewünschte Werkzeug R, A, E, D trägt bzw. aufnehmen soll. Der Verfahrweg 7 des Handhabungssystems 5 ist entsprechend positioniert.

Die radialen Arme 3 bestehen aus einer zentralen radial verlaufenden rohrförmigen Tragstange 3A. Zusätzlich sind links und rechts parallel zur Tragstange 3A rohrförmige Stützstangen 3B, C vorgesehen, die mit ihren Oberseiten in der radialen Ansicht gemeinsam mit der Tragstange 3A teilkreisförmig angeordnet sind, um eine gute Auflage für die hohlen zylindrischen Werkzeuge R, A, E, D auszubilden.

Die Tragstange 3A und die Stützstangen 3B, C laufen an dem Turm 2 abgewandten Ende konisch zu, um das Auffädeln der Werkzeuge R, A, E, D zu vereinfachen. Auch sind die Tragstange 3A und die Stützstangen 3B, C im Bereich der dem Turm 2 abgewandten Enden miteinander durch eine Lasche 15 verstrebt.

Vorliegend sind die radialen Arme 3 je Ebene 4 identisch und gleich beabstandet angeordnet. Es sind pro Ebene 4 acht radiale Arme 3 zur Lagerung vorgesehen und jeder Turm 2 weist fünf Ebenen 4 zur Lagerung auf. Alle radialen Arme 3 weisen dieselbe Länge auf.

Die radialen Arme 3 einer Ebene 4 stehen direkt vertikal (senkrecht) über den radialen Armen 3 der Ebene 4 darunter bzw. darüber.

Die kleineren bzw. schmaleren Werkzeuge, wie die Distanzringe D oder Endanlageringe E, können vom Greifkopf 17 so im vorderen Bereich der radialen Arme abgelegt bzw. platziert werden, dass sie hinten nicht mit den längeren (bzw. breiteren) und größeren Rollenscherenmessern R und Auswerferringen A aneinanderstoßen.

Hierzu sind die radialen Arme 3 mit Abstandhaltern 16 ausgestattet, die je nach vorgesehenem Werkezeug in Längsrichtung der radialen Arme 3 positioniert sind, so dass das jeweilige Werkzeug entweder nicht am Turm 2 anstößt und/oder nur im vorderen Bereich der radialen Arme 3 gelagert werden kann, da es nicht zum Turm 2 hin verrutschen kann.

Die Steuerung 1000 ist programmiert die gesamte Vorrichtung zu steuern, was auch die Belegung der durch die radialen Arme 3 ausgebildeten Lagerplätze und die Bewegungen der Turme 2 und des Handhabungssystems 5 umfasst.

Die Steuerung 1000 steuert das Handhabungssystem 5 derart an, dass Werkzeuge R, A eines bestimmten Außen-Durchmessers, nämlich Rollenscherenmesser R und Auswerferringe A jeweils auf nur ihnen zugeordneten radialen Armen 3 eines Turms 2 gelagert werden und im Außen-Durchmesser kleinere Werkzeuge, nämlich Distanzringe D und Endanlageringe E jeweils auf nur ihnen zugeordneten radialen Armen 3 gelagert werden.

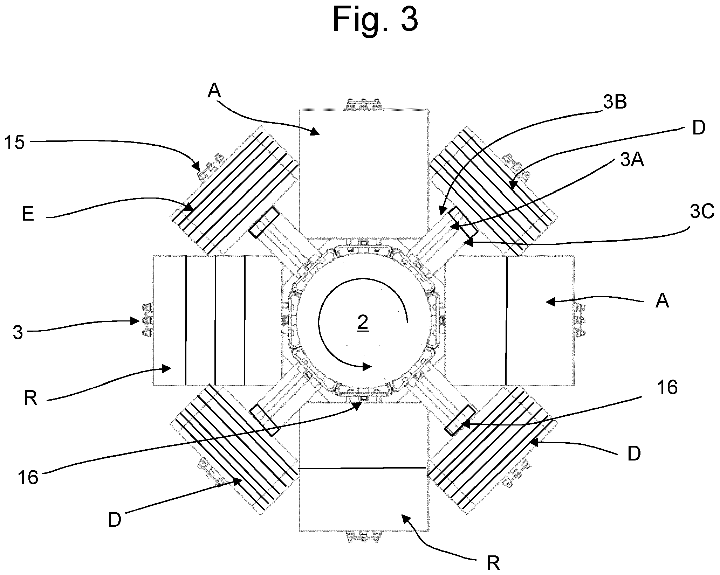

Es versteht sich, dass je nach Werkzeuglänge mehrere Werkzeuge hintereinander auf demselben radialen Arm 3 bzw. Lagerplatz gelagert werden. Dies trifft insbesondere für die schmalen Distanzringe D und Endanlageringe E (vgl. Figur 3) zu. Diese sind meist mehrfach hintereinander gelagert. Die breiteren Rollenscherenmesser R und Auswerferringe A werden jedoch ebenfalls je nach Breite oft doppelt oder mehrfach hintereinander gelagert werden.

Das Werkzeuglager ist also in zwei verschiedene Lagerplatztypen eingeteilt. Auf den ersten Lagerplätzen werden nur Rollenscherenmesser R und Auswerferringe A gelagert. Die zweiten Lagerplätze sind wiederum ausschließlich für Distanzringe D und Endanlageringe E vorgesehen.

Da die Distanzringe D bzw. Endanlageringe E einen kleineren Außendurchmesser als die Rundmesser und Auswerferringe haben, kann der Abstand der Lagerplätze bzw. der radialen Arme 3, die die Lagerplätze ausbilden, durch die gezielte Lagerung der Werkzeuge optimiert werden, immer mit dem Gedanken, dass möglichst alle Lagerplätze belegt werden, um ein möglichst kleines Gesamtmaß umzusetzen.

Dadurch können die Lagerplätze bzw. radialen Arme 3 näher aneinander platziert werden, so dass der ungenutzte Raum zwischen den Lagerplätzen gegenüber den bekannten Lagern verringert wird. Insbesondere ist so der vertikal benötigte Platz optimiert.

Die Belegung der radialen Arme 3 bzw. Lagerplätze der Art bzw. dem Typ nach sind fest zugeordnet. Es sind also bestimmte Lagerplätze bzw. radiale Arme 3 immer mit Rollenscherenmessern R und Auswerferringen A belegt und Lagerplätze bzw. radialen Arme 3 der anderen Zuweisung immer mit Distanzringen D oder Endanlageringen E. Die Lagerplatztypen sind abwechselnd angeordnet.

Daher ist der Abstand zwischen den vertikal (senkrecht) übereinander angeordneten radialen Armen 3, also der Abstand zwischen den Ebenen 4, etwa auf eine Größe eingestellt, die dem Innendurchmesser und der Materialstärke der Rollenscherenmesser R bzw. Auswerferringe A plus der Materialstärke der Distanzringe D bzw. der Endanlageringe E entspricht. Hinzu kommt ein kleines Spaltmaß von ca. 15 mm, um das Greifen zu ermöglichen bzw. das Stoßen zu verhindern.

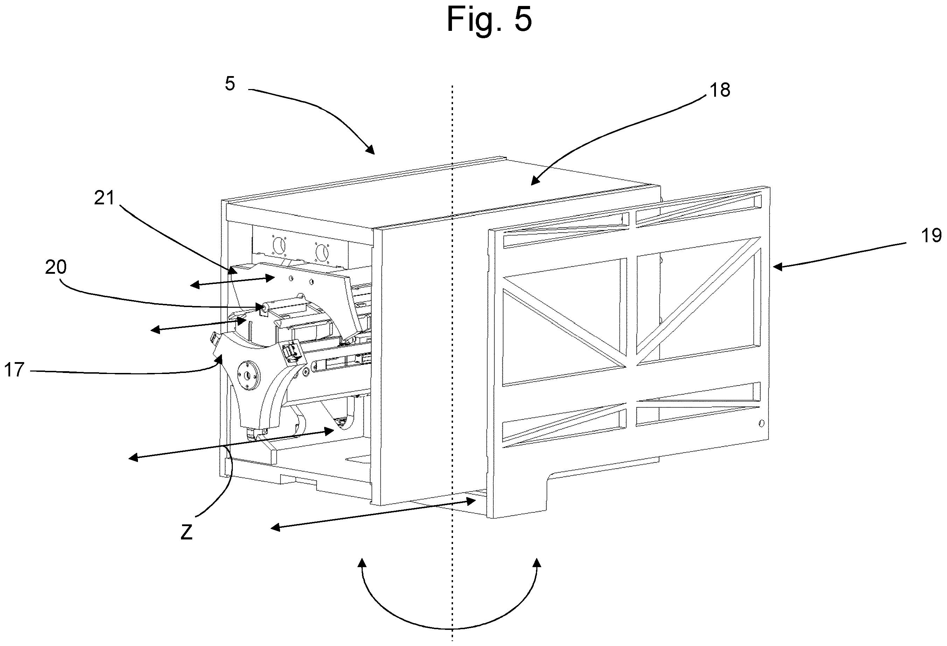

Das Handhabungssystem 5 ist nicht nur linear horizontal entlang des Verfahrwegs 7 und vertikal entlang des Masts 8 verfahrbar, sondern umfasst auch einen Greifkopf 17, der aus einem Gehäuse 18 linear ein- und aus-teleskopierbar ausgestaltet ist. Das Handhabungssystem 5 kann zusätzlich eine senkrechte Rotationsachse aufweisen (vgl. Figur 5), so dass es möglich wird, Werkzeuge ggf. an eine gegenüberliegende Wand abzulegen.

Das Gehäuse 18 ist über eine Befestigungsplatte 19 am Mast 8 verfahrbar befestigt. Das Gehäuse 18 und die Befestigungsplatte 19 sind ebenfalls relativ zueinander linear beweglich, um die Reichweite zu erhöhen, um z. B. durch die Lücke 13 hindurch den Arm 11 des Messervorbaugerüsts 10 zu erreichen.

Die Linearbewegungen werden durch Zahnstangenantriebe, Spindelantriebe, Elektrozylinder und Linearachsen ausgeführt.

Der Greifkopf 17 ist in dem Gehäuse 18 unterhalb einer linear ein- und ausfahrbaren Tragschiene 20 angeordnet, die zum eigentlichen Transport der ergriffenen Werkzeuge dient. Oberhalb der Tragschiene 20 ist ein ebenfalls linear beweglicher Schieber 21 angeordnet, der zum Herunterschieben der auf der Tragschiene 20 transportierten Werkzeuge dient.

Der Greifkopf 17 umfasst drei radial (linear) ausfahrbare Greiffinger 22, die jeweils einen 120 Grad Winkel zwischen sich ausbilden und jeweils eine keilförmige Spitze 23 aufweisen.

Die Greiffinger 22 sind Y-förmig angeordnet, so dass keine Kollision beim Aufnehmen und Ablegen mit den radialen Armen 3 bzw. der Tragschiene 20 oder dem Arm 11 des Messervorbaugerüsts 10 erfolgt.

Die Greiffinger 22 sind zwischen einer Ruhestellung und einer Greifstellung radial verfahrbar ausgestaltet sind, um in die Werkzeuge in der Greifstellung zu ergreifen.

Die gesteuerte Linearbewegung der Greiffinger 22 in ihrer Führung 31 im Greifkopf 17 erfolgt mittels einer Kniehebelmechanik 24 und die Kniehebelmechanik 24 wird über einen Kugelgewindeantrieb 25 verstellt. Durch den Kugelgewindeantrieb 25 kann die Kniehebelmechanik 24 stufenlos und genau bewegt werden.

Die Kniehebelmechanik 24 greift dabei an einen Greiffingerkörper 30 an, der im Greifkopf 17 geführt ist und an dessen Ende das eigentlich mit dem Werkzeug wechselwirkende Ende (z. B. Spitze 23) angeordnet ist.

Der Greifkopf 17 ist ausgestaltet, um alle Arten von hohlen zylindrischen Werkzeugen von Längsteilanlagen zu handhaben.

Er kann also angesteuert werden, um einzelne hohle zylindrische Werkzeuge aus einer Gruppe von aneinander liegenden Werkzeugen ohne Verringerung der Wandstärke am Innenrand, also Distanzringe D und Endanlageringe E, zu ergreifen.

Diese sind besonders schwierig handzuhaben, da sie anders als Rollenscherenmesser R und Auswerferringe A keine Schmutzrille aufweisen, die eine Art Eingriffstasche ausbildet und zum Aneinanderhaften neigen.

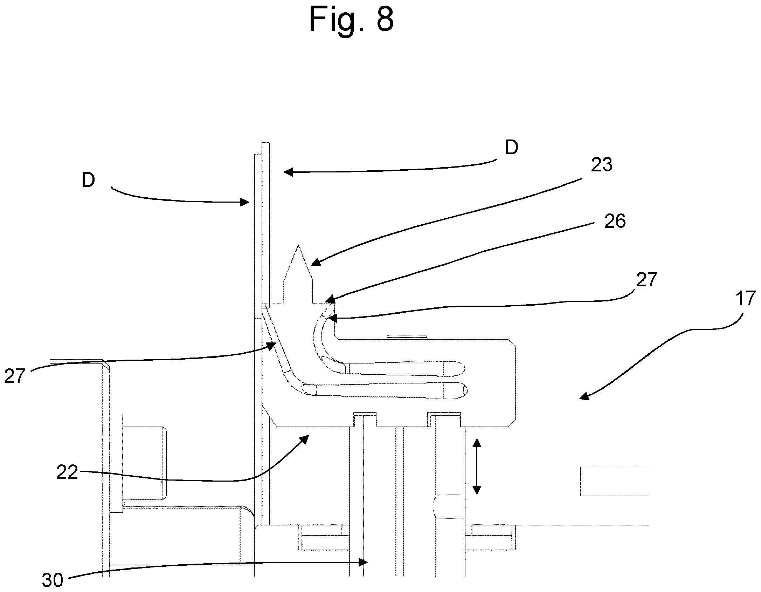

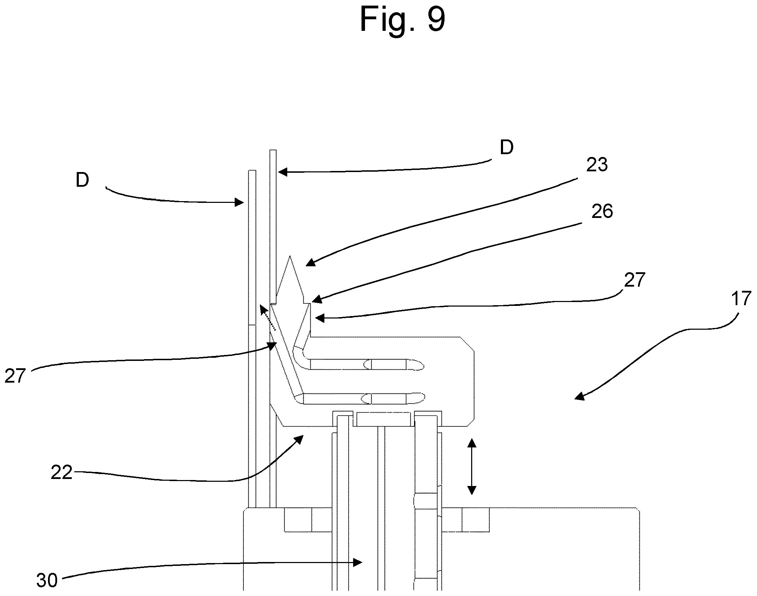

Um diese zu greifen, erfolgt ein Einführen des Greifkopfs 17 mit eingezogenen Greiffingern 22 in der Ruhestellung in das jeweilige hohle zylindrische Werkzeug und anschließend ein Aufspreizen durch Ausfahren der Greiffinger 22 in die Greifstellung mittels der Kniehebelmechanik 24, wobei der jeweilige Greiffingerkörper 30 in der Führung 31 radial gesteuert bewegt wird, um das jeweilige Werkzeug D, E von innen klemmend zu halten (vgl. Figur 8 und 9).

Anschließend kann der Greifkopf 17 zurückgezogen werden und das Werkzeug an die Tragschiene 20 übergeben werden. Diese kann - je nach Bedarf - vorpositioniert werden. Anschließend können sowohl der Greifkopf 17 als auch die mit dem Werkzeug belegte Tragschiene 20 in das Gehäuse 18 zum geschützten Transport eingezogen werden.

Die Greiffinger 22 weisen zum besseren spreizenden Klemmen am Übergang zu den keilförmigen Spitzen 23 einen äußeren und inneren Klemmabsatz 26 auf. In diesem Bereich haben auch Druckluftdüsen 27 ihren Ausgang. Das eigentliche Klemmen erfolgt mittels spannbacken-artiger Anlage der Klemmabsätze 26 von innen gegen die innere zylindrische Wandung des Werkzeugs.

Der Greifkopf 17 kann auch angesteuert werden, um solche Werkzeuge mit Verringerung der Wandstärke am Innenrand, also Rollenscherenmesser R und Auswerferringe A zu ergreifen. Dazu erfolgt ein Einführen mit den eingezogenen Greiffingern 22 in der Ruhestellung und Hindurchführen. Dann werden die Greiffinger 22 radial ausgefahren, um in der Greifstellung die Werkzeuge zu hintergreifen, wobei die keilförmigen Spitzen 23 der Endbereiche zwischen die Werkzeuge eingreifen und diese trennen.

Die Druckluftdüsen 27 erlauben den Greiffingern 22 eine gerichtete abstoßende Kraft zu erzeugen, um an dem Werkzeug haftende benachbarte Werkzeuge davon besser zu lösen.

Genauer gesagt liegen die Ausgänge der Druckluftdüsen 27 im Bereich unterhalb der keilförmigen Spitze 23 am Klemmabsatz 26 und werden mit Druckluft über eine Leitung 28 beaufschlagt.

Die Druckluftdüsen 27 sind in axialer-radialer Richtung schräg von Innen nach Außen in Zugriffsrichtung (Pfeil Z in Figur 5) und entgegengesetzt verlaufend ausgerichtet, um das Ablasen zu verbessern. Die Druckluftzufuhr über die Leitung 28 erfolgt gesteuert kontinuierlich und/oder pulsierend oder stoßweise, je nach Bedarf und Einstellung mittels der Steuerung 1000, aus einer nicht dargestellten Druckluftquelle, wie z. B. einem Kompressor, der auch im Handhabungssystem 5 integriert sein kann.

Zur Unterstützung der einzelnen Handhabung und Trennung der Werkzeuge voneinander weist der Greifkopf 17 zusätzlich je Greiffinger 22 eine Vibrationseinrichtung 29 auf, die innerhalb des Greiffingerkörpers 30 integriert ist. Die Vibrationseinrichtung 29 (Vibrationsmotor) versetzt gezielt die Greiffinger 22 in Vibration. Somit kann die Vibration kontrolliert auf die Werkzeuge übertragen werden. Dann können die Werkzeuge durch das so entstehende Schütteln beim Greifen zusätzlich getrennt werden.

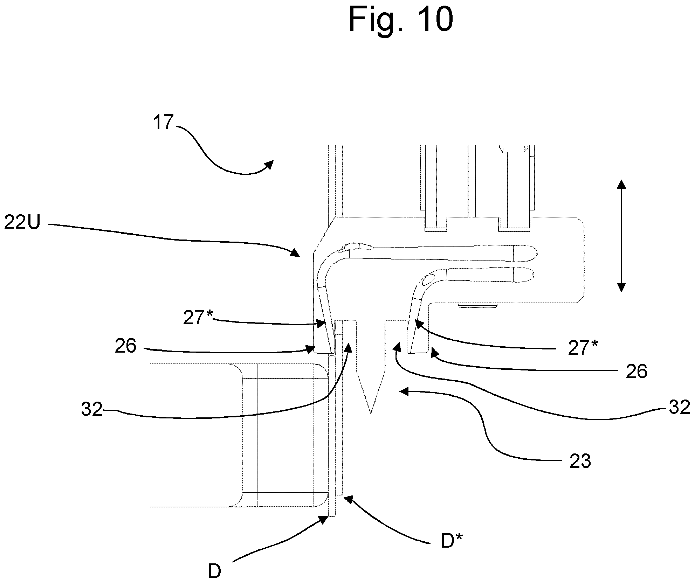

Wie in Figur 10 dargestellt, ist es möglich, dass der untere Greiffinger 22U abweichend ausgestaltet ist. Dazu kann dieser eine abweichende Erstreckung und neben der keilförmigen Spitze (Abschiebekeil) 23 und dem Klemmabsatz 26 auch eine Abschiebenut 32 aufweisen. Der Abschiebekeil 23 fluchtet dann mit denjenigen der übrigen Greiffinger 22 und der Klemmabsatz 26 ist davon durch die Abschiebenut 32 beabstandet, so dass der Klemmabsatz 26 weiter in Greifrichtung vorsteht als die der übrigen Greiffinger 22. Somit wird es möglich, mit den übrigen (z. B. oberen) Greiffingern 22 das gewünschte Werkzeug D* (Distanzring) spreizend zu klemmen und somit zu greifen und gleichzeitig das ungewünschte hintere Werkzeug D mit dem versetzten Klemmabsatz 26 zurückzuhalten und das Greifen und Abziehen des gewünschten Werkzeugs durch die Abschiebenut 32 zu unterstützen.

Beim Spreizen wird demnach das gewünschte vordere Werkzeug D* durch den Klemmabsatz 26 der oberen Greiffinger 22 nach oben geschoben und entfernt sich somit von dem radialen Arm 3, auf dem es gelagert ist (vgl. Figuren 8 und 9).

Damit das hintere anhaftende Werkzeug D nicht mit nach oben rutscht, wird dieses von dem unteren Greiffinger 22U mit dessen versetztem Klemmabsatz 26 unten gehalten.

Dadurch, dass hintere anhaftende Werkzeug D vor die Druckluftdüsen der oberen Greiffinger 22 rutscht, steigt der Effekt mit der Druckluft, das dahinterliegende Werkzeug abzustoßen.

In diesem Fall fahren alle drei Greiffinger gleichzeitig und gleichmäßig aus. Sind die Greiffinger vollständig ausgefahren, wird das ungewünschte Werkzeug durch den Klemmabsatz des unteren Greiffingers gehalten oder eingeklemmt und der Greifkopf kann sich mit dem gewünschten Werkzeug wegbewegen.

Zusätzlich können die Druckluftdüsen 27* am Klemmabsatz 26 des unteren Greiffingers 22U abweichend ausgestaltet sein. Die Druckluftdüsen 27* sind umgekehrt als die übrigen in axialer-radialer Richtung schräg von Außen nach Innen in Zugriffsrichtung und entgegengesetzt verlaufend ausgerichtet, so dass die Druckluft zur keil-förmigen Spitze 23 (Abschiebekeil) hin ausgestoßen wird und auf das gewünschte Werkzeug D* wirkt.

Um unterschiedlichen Innendurchmessern der Werkzeuge zu begegnen und verschiedene Klemmkräfte auszubilden, sind die Greiffinger 22 hinsichtlich des Ausmaßes der Ausfahrlänge gesteuert radial verfahrbar ausgestaltet. Dabei besteht die Möglichkeit, die Kraft separat und individuell über die Steuerung 1000 einzustellen und bei wiederkehrenden Werkzeugen eine gezielte Voreinstellung für die beste Klemmkraft zu erreichen.

**Bezugszeichenliste**

| | | | |
|---|---|---|---|
| 1 | Vorrichtung | 30 | Greiffingerkörper |
| 2 | Turm | 31 | Führung |
| 3 | radialer Arm | 32 | Abschiebenut |
| 3A | Tragstange | 1000 | Steuerung |
| 3B, C | Stützstange | R | Rollenscherenmesser |
| 4 | Ebene | A | Auswerferring |
| 5 | Handhabungssystem | D, D* | Distanzring |
| 6 | Einhausung | E | Endanlagering |
| 7 | Verfahrweg | Z | Zugriffrichtung |
| 7A | Führung | | |
| 8 | Mast | | |
| 9 | Traggerüst | | |
| 10 | Messervorbaugerüst | | |
| 11 | Arm | | |
| 12 | Öffnung | | |
| 13 | Lücke | | |
| 14 | Verfahrrahmen | | |
| 15 | Lasche | | |
| 16 | Abstandhalter | | |
| 17 | Greifkopf | | |
| 18 | Gehäuse | | |
| 19 | Befestigungsplatte | | |
| 20 | Tragschiene | | |
| 21 | Schieber | | |
| 22, 22U | Greiffinger | | |
| 23 | Spitze | | |
| 24 | Kniehebelmechanik | | |
| 25 | Kugelgewindeantrieb | | |
| 26 | Klemmabsatz | | |
| 27, 27* | Druckluftdüse | | |
| 28 | Leitung | | |
| 29 | Vibrationseinrichtung | | |

## Patentansprüche

1. Vorrichtung (5) zum automatischen Handhaben hohler zylindrischer Werkzeuge (R; E; A; D), insbesondere von Werkzeugen (E, D) ohne Verringerung der Wandstärke am Innenrand von Längsteilanlagen, welche einen Greifkopf (17) umfasst, der mindestens zwei, vorzugsweise drei, radial ausfahrbare Greiffinger (22) aufweist, die jeweils einen Winkel größer 90 Grad zwischen sich ausbilden und zwischen einer Ruhestellung und einer Greifstellung radial verfahrbar ausgestaltet sind, um in die Werkzeuge (R; E; A; D) in der Ruhestellung einzugreifen und in der Greifstellung spreizend zu klemmen,
**dadurch gekennzeichnet, dass** die Greiffinger (22) jeweils über eine Einrichtung (27) zur Erzeugung einer gerichteten Abstoßungskraft im Endbereich verfügen.

2. Vorrichtung nach Anspruch 1, **dadurch gekennzeichnet, dass** die Einrichtung zur Erzeugung einer gerichteten Abstoßungskraft eine Druckluftdüse (27) ist.

3. Vorrichtung nach Anspruch 1 oder 2, **dadurch gekennzeichnet, dass** der Greifkopf (17) eine Vibrationseinrichtung (29) aufweist.

4. Vorrichtung nach Anspruch 3, **dadurch gekennzeichnet, dass** die Vibrationseinrichtung (29) ausgebildet ist, um die Greiffinger (22) vibrieren zu lassen.

5. Vorrichtung nach einem der vorhergehenden Ansprüche, **dadurch gekennzeichnet, dass** die Greiffinger (22) mittels eines Linearantriebs, insbesondere einer Kniehebelmechanik (24), zwischen der Ruhestellung und der Greifstellung verfahrbar sind.

6. Vorrichtung nach einem der vorhergehenden Ansprüche, **dadurch gekennzeichnet, dass** die Greiffinger(22) hinsichtlich des Ausmaßes der Ausfahrlänge gesteuert radial verfahrbar ausgestaltet sind.

7. Vorrichtung nach einem der vorhergehenden Ansprüche 5 oder 6, **dadurch gekennzeichnet, dass** der Linearantriebs eine Kniehebelmechanik (24) ist und die Kniehebelmechanik über ein Kugelgewindeantrieb (25) angetrieben ist.

8. Vorrichtung nach einem der vorhergehenden Ansprüche, **dadurch gekennzeichnet, dass** die Greiffinger (22) zwischen sich jeweils einen 120 Grad Winkel ausbilden.

9. Vorrichtung nach einem der vorhergehenden Ansprüche, **dadurch gekennzeichnet, dass** die Greiffinger (22) jeweils einen spitz-zulaufenden Endbereich (23) aufweisen.

10. Vorrichtung nach Anspruch 9, **dadurch gekennzeichnet, dass** die Greiffinger (22) am Übergang zum spitz-zulaufenden Endbereich einen äußeren und/oder inneren Klemmabsatz (26) aufweisen.

11. Verfahren zum automatischen Handhaben eines einzelnen hohlen zylindrischen Werkzeugs aus einer Gruppe von aneinander liegenden Werkzeugen, insbesondere eines hohlen zylindrischen Werkzeugs (E, D) ohne Verringerung der Wandstärke am Rand, gegebenenfalls unter Verwendung einer Vorrichtung nach einem der vorhergehenden Ansprüche, wobei das hohle zylindrische Werkzeug durch Einführen und Aufspreizen von Greiffingern (22) eines Greifkopfes (17) von innen klemmend gehalten wird, und anschließend die Greiffinger (22) eine gerichtete abstoßende Kraft erzeugen und/oder vibrieren, um an dem Werkzeug (E, D) haftende weitere Werkzeuge (E, D) davon zu lösen.
